# EUROPÄISCHE PATENTSCHRIFT

(11) **EP 1 518 097 B1**
(45) Veröffentlichungstag und Bekanntmachung des Hinweises auf die Patenterteilung: **15.06.2011**
(21) Anmeldenummer: 03735695.3
(22) Anmeldetag: 01.07.2003
(51) Int. Cl.: G01L 9/00, G01L 19/04, G01L 19/06

(54) **KAPAZITIVER DRUCKSENSOR**
CAPACITIVE PRESSURE SENSOR
CAPTEUR DE PRESSION CAPACITIF

(30) Priorität: 02.07.2002 DE 10229703
(43) Veröffentlichungstag der Anmeldung: 30.03.2005
(73) Patentinhaber: Endress + Hauser GmbH + Co. KG, 79689 Maulburg (DE)
(72) Erfinder: DREWES, Ulfert, 79379 Müllheim (DE); GETMAN, Igor, 79539 Lörrach (DE); HEGNER, Frank, 79540 Lörrach (DE)
(74) Vertreter: Andres, Angelika Maria
(86) Internationale Anmeldenummer: PCT/EP2003/006961
(87) Internationale Veröffentlichungsnummer: WO 2004/005875

(56) Entgegenhaltungen:
- DE-A- 4 416 978
- DE-A1- 4 130 044
- DE-A1- 4 130 044
- DE-A1- 10 127 230
- DE-A1- 10 127 230
- DE-A1- 19 813 756
- DE-A1- 19 813 756
- US-A- 5 132 658
- US-A- 5 132 658
- US-A- 5 386 729
- US-A- 5 386 729
- US-A- 5 712 428
- US-A- 5 877 039
- US-A- 5 877 039
- US-A- 6 055 864
- US-A- 6 111 340
- US-A- 6 111 340

## Beschreibung

Die Erfindung betrifft einen kapazitiven Drucksensor, insbesondere einen kapazitiven keramischen Drucksensor.

Derartige Drucksensoren werden vielfach in der Prozeßmeßtechnik eingesetzt, um den Druck von Prozeßmedien zu messen, die als Flüssigkeiten, Gase oder Dämpfe vorliegen können. Im wesentlichen umfassen derartige Drucksensoren eine Druckmeßzelle aus einem Grundkörper und einer elastischen Membran, insbesondere aus einem keramischen Grundkörper und einer keramischen Membran. Am Grundkörper ist eine flache Ausnehmung vorgesehen, die auch als Membranbett bezeichnet wird und die von der Membran überdeckt wird. Im Meßbetrieb wird die Membran mit dem Druck eines Prozeßmediums beaufschlagt, und die Verformung der elastischen Membran, die beispielsweise kapazitiv oder resistiv ermittelt wird, ist ein Maß für den Druck. Eine entsprechende Druckmeßzelle ist u.a. in der deutschen Offenlegungsschrift DE 39 01 492 offenbart.

Im Meßbetrieb wird eine Druckmeßzelle gewöhnlich axial eingespannt zwischen einem medienseitigen elastischen Dichtring, der auf der membranseitigen Stirnfläche des Sensors aufliegt, und einem Stützring, welcher die von der Membran abgewandte Stirnfläche des Grundkörpers axial abstützt, wie beispielsweise in der deutschen Offenlegungsschrift DE 42 13 857 dargestellt ist.

US Patent 6 055 864 offenbart einen Drucksensor mit einem einen Messraum aufweisenden Gehäuse, mit einer mittels eines Haltekörpers in dem Gehäuse abgestützten und den Messraum begrenzenden Messzelle und mit einem mit der Messzelle verbundenen elektrischen Kontaktsockel, wobei der Messraum über eine Öffnung des Gehäuses mit Druck beaufschlagbar ist, dadurch gekennzeichnet, dass der Haltekörper mittels einer formschlüssigen Verbindung, in dem Gehäuse fixiert ist, wobei die formschlüssige Verbindung eine Einschnürung des Gehäuses aufweist.

US Patent 5712428 offenbart einen Druckaufnehmer bei dem die Messzelle nicht gegen einen Dichtring eingespannt ist, wodurch Einspannkräfte vermieden werden, dies wird aber dadurch erkauft, dass der zu messende Druck nur indirekt über eine Trennmembran und einen elastischen Festkörper auf das Sensorelement wirken kann.

DE 4416978 offenbart einen Drucksensor bei dem die Druckmesszelle rückseitig von einem Stützring mit einem inelastischen Körper und radial elastischen Beinen abgestützt ist. Dies ist insoweit nachteilig, als selbst dann, wenn die Beine den Relativbewegungen zwischen dem inelastischen Körper des Stützrings und den Aufsatzflächen der elastischen Beine folgen, dennoch veränderliche radiale Kräfte in die Druckmesszelle eingeleitet werden.

Insofern, als die Verformung der Membran bei gegebenem Druck von der effektiven Membransteifigkeit abhängt, ist es erforderlich, die Membransteifigkeit nach der Kalibrierung des über den Meßbereich des Drucksensors, möglichst konstant zu halten. Es ist daher besonders wichtig, daß möglichst wenige radiale Kräfte auf die Druckmeßzelle wirken, da radial einwärts wirkende Kräfte die Membransteifigkeit verringern und radial auswärts wirkende Kräfte die Membransteifigkeit vergrößern können.

Die bisherigen Bemühungen zur Veringerung des Einflusses von Radialkräften betrafen vor allem die rückseitige Reibungsentkopplung. Zu diesem Zweck ist beispielsweise bei den kapazitiven Drucksensoren, die von der Anmelderin hergesellt und unter dem Namen Cerabar vertrieben werden, eine Polymerfolie zwischen der rückseitigen Stirnfläche des Grundkörpers und dem Stützring angeordnet. Zudem wird der axiale Anpreßdruck des medienseitigen elastischen Dichtrings so weit wie möglich reduziert, um die Einleitung von Lateralkräften durch Reibschluß zu minimieren. Die genannten Maßnahmen haben zwar bereits zu einer Verbesserung der Meßgenauigkeit geführt, aber eine weitere Reduzierung störender Radialkräfte erscheint wünschenswert.

Der Erfindung liegt daher die Aufgabe zugrunde, einen im obigen Sinn verbesserten Drucksensor bereitzustellen. Die Aufgabe wird erfindungsgemäß gelöst durch den Drucksensor gemäß des unabhängigen Patentanspruchs 1. Und das Verfahren zum Entwurf eines Drucksensors gemäß des unabhängigen Anspruchs 12.

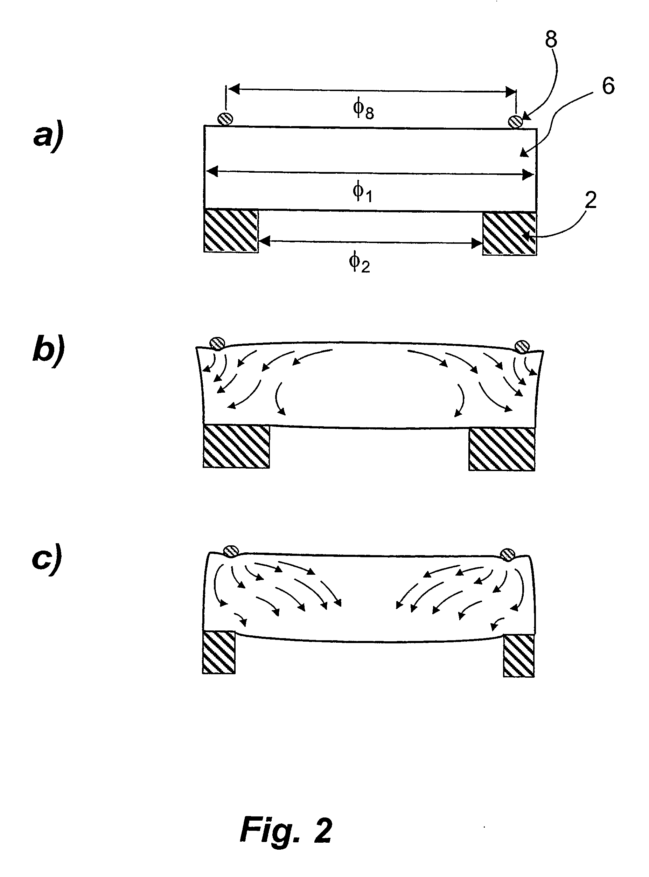

Bei Arbeiten zur Verbesserung eines Drucksensors ist es den Erfindern der vorliegenden Erfindung gelungen, eine weitere Quelle von störenden Radialkräften zu identifizieren und weitgehend zu eliminieren. Der Grundgedanke der Erfindung wird nun anhand von Fig. 2 erläutert. Wenngleich der Grundkörper einer Druckmeßzelle hinreichend steif sein sollte, damit er bei einer Druckbeaufschlagung nicht verformt wird, so gilt dies natürlich nicht streng, sondern nur als idealisierte Aussage, denn das Elastizitätsmodul des Grundkörpermaterials ist naturgemäß eine endlich Größe. So hat sich bei Berechnungen mit der Finite-Elemente-Methode (nachfolgend FEM) ergeben, daß die axiale Einspannung der Druckmeßzelle 6 zwischen einem Dichtring 8 und einem Stützring 2 eine elastische Durchbiegung der rückseitigen Stirnfläche des Grundkörpers in axialer Richtung um einige 10 nm bis 100 nm bewirken kann.

Bezüglich der Meßgenauigkeit des Drucksensors erweist sich in diesem Zusammenhang der Innendurchmesser φ₂ des Stützrings 2 als besonders kritische Größe. Ist die Auflagefläche des Stutzrings 2 zu groß, bzw. ist der Innendurchmesser φ₂ zu klein, so bewirken die axialen Einspannkräfte, die durch den Dichtring 8 mit dem Durchmesser φ₈ in die Druckmeßzelle bzw. den Grundkörper eingeleitet werden Biegemomente in der Druckmeßzelle, welche eine in der Summe radial auswärts gerichtete Verformung der Meßmembran bewirken, wie übertrieben in der Fig. 2b dargestellt ist. In ähnlicher Weise wird die dem Dichtring 8 zugewandte Stirnfläche radial einwärts elastisch verformt, wenn die Auflagefläche des Stützrings 2 zu klein bzw. der Innendurchmesser φ₂ des Stützrings 2 zu groß ist (vergl. Fig. 2c). Die in den Figuren gezeigten Verschiebungsvektoren, dienen lediglich zur Veranschaulichung, sie sind nicht das Ergebnis von quantitativen Berechnungen.

Die beschriebenen stirnseitigen radialen Verformungen wären grundsätzlich vertretbar, wenn sie konstant gehalten werden könnten. Dies ist jedoch nicht praktikabel, da die radialen Verformungen auch eine Funktion der axialen Einspannkräfte sind, welche insbesondere von der Alterung bzw. Temperung des elastischen Dichtrings abhängen, über den die axialen Einspannkräfte eingeleitet werden. Beispielsweise kann die axiale Einspannkraft irreversibel von 500 N auf etwa 400 N reduziert werden, wenn ein Drucksensor mit einem neu eingesetzten Dichtring auf 80° erwärmt wird.

Veränderungen der radialen Verformung sind praktisch also nur durch ein Design zu verhindern, bei dem selbst bei maximaler axialer Einspannkraft keine nennenswerten radialen Verformungen auftreten.

Die erfindungsgemäße Lösung beruht daher darauf, für eine Druckmeßzelle mit vorgegebenen Abmessungen und Materialeigenschaften einen Innendurchmesser φ₂ des Stützrings 2 zu identifizieren, bei dem die radiale Verformung der Druckmeßzelle im Bereich der Fügestellen der Meßmembran weitgehend eliminiert ist, so daß die Variation der Membransteifigkeit aufgrund der sich verändernden axialen Einspannkräfte bis auf einen vertretbaren Restfehler minimiert ist. Es ist derzeit nicht möglich einen geschlossenen analytischen Ausdruck für die Dimensionierung des Stützrings als Funktion der anderen Abmessungen anzugeben. Jedoch ist es dem Fachmann anhand des hier vorgeschlagenen Lösungsweges ohne weiteres möglich, die erforderliche Dimensionierung des Stützrings mittels FEM durchzuführen. Geeignete Simulationssoftware ist beispielsweise unter der Marke ANSYS erhältlich.

Der erfindungsgemäße Drucksensor umfaßt
eine Druckmeßzelle mit einem im wesentlichen zylindrischen Grundkörper mit einem ersten Durchmesser und einer ersten Dicke, einen an einer Stirnfläche des Grundkörpers gefügten Meßmembran mit einem zweiten Durchmesser und einer zweiten Dicke, wobei die Druckmeßzelle axial eingespannt ist zwischen einem elastischen Dichtring mit einem dritten Durchmesser und einer dritten Dicke, der auf der membranseitigen Stirnseite der Druckmeßzelle aufliegt, und einem Stützring mit einem vierten Außendurchmesser, einem vierten Innendurchmesser und einer vierten Dicke, wobei der Stützring die von der Meßmembran abgewandte rückwärtige Stirnseite der Druckmeßzelle abstützt; wobei ferner die Abmessungen des Stützrings solchermaßen auf die Abmessungen des Dichtrings und der Druckmesszelle abgestimmt sind, daß eine durch die axiale Einspannung der Druckmeßzelle bedingte radiale Verformung der membranseitigen Stirnfläche so gering ist, daß der Spannenfehler des Drucksensors aufgrund einer Reduzierung der axialen Einspannkraft um mindestens 10% nicht mehr als etwa 0,02% beträgt.

Vorzugsweise sind die Abmesungen des Stützrings so weit optimiert, daß der Spannenfehler bei einer Reduzierung der Einspannkraft um mindestens 20% nicht mehr als etwa 0,02% beträgt.

Besonders bevorzugt sind die Abmesungen des Stützrings so weit optimiert, daß der Spannenfehler bei einer Reduzierung der Einspannkraft um mindestens 10% bzw. mindestens 20% nicht mehr als etwa 0,01 % beträgt. Der Spannenfehler bezeichnet in diesem Zusammenhang die Abweichung der bei reduzierter axialer Einspannkraft auftretenden Differenz zwischen dem Meßwert bei Maximaldruck und dem Meßwert ohne Druckbeaufschlagung von der entsprechenden Differenz bei voller axialer Einspannkraft. Die volle axiale Einspannkraft bezeichnet beispielsweise die axiale Einspannkraft, mit der Drucksensoren mit neuen Dichtringen montiert werden, um auch nach einer Temperung bzw. Alterung des Dichtrings den spezifikationsgemäßen Druck sicher halten zu können.

Bei einer derzeit bevorzugten Ausführungsform beträgt die axiale Einspannkraft zwischen 350 N und 550 N. Die gewählte Einspannkraft wird jedoch im Einzelfall von der Art der Dichtung und dem Nenndruck bzw. den Spezifikationen des Drucksensors abhängen.

Vorzugsweise sind der Grundkörper und die Meßmembran aus dem gleichen Material gefertigt, wobei derzeit ein keramisches Material, insbesondere Korund, bevorzugt wird. Die Meßmembran weist bevorzugt etwa den gleichen Durchmesser wie der Grundkörper auf. Insbesondere bei keramischen Drucksensoren kann die Meßmembran mittels eines Aktivhartlots oder eines Glases an der Stirnseite des Grundkörpers befestigt sein. In einer weiteren bevorzugten Ausführungsform umfaßt die Fügestelle ein Sinterkorund.

Der Stützring weist in der derzeit bevorzugten Ausführungsform ebenfalls das gleiche Material wie der Grundkörper auf. Dies ist insofern vorteilhaft, als der Stützring dann den gleichen Wärmeausdehnungskoeffizienten wie der Grundkörper aufweist. Der Stützring sollte vorzugsweise ein Material aufweisen das mindestens so steif ist wie der Grundkörper. Der Außendurchmesser des Stützrings sollte nicht kleiner und vorzugsweise gleich dem Durchmesser des Grundkörpers sein. In einer derzeit bevorzugten Ausführungsform ist der Stützring fest mit dem Grundkörper verbunden. Dies kann durch Löten, beispielsweise mit einem Aktivhartlot, oder durch Kleben erfolgen. Schließlich kann der Stützring einstückig mit dem Grundkörper gefertigt sein. Der Stützring weist bevorzugt mindestens die Dicke des Grundkörpers auf.

Der erfindungsgemäße Drucksensor umfaßt vorzugsweise ein metallisches Gehäuse, insbesondere aus Stahl, mit einer im wesentlichen zylindrischen Meßzellenkammer für die Druckmeßzelle, wobei das Gehäuse in seinem Inneren eine axiale Anschlagfläche aufweist, welche den Dichtring axial abstützt. Zudem ist vorzugsweise ein Gewindering vorgesehen, der in ein Innengewinde in der zylindrischen Meßzellenkammer eingreift und auf die der Druckmeßzelle abgewandten Rückseite des Stützrings eine axiale Einspannkraft ausübt.

Vorzugsweise sind Mittel vorgesehen, um die Reibung zwischen dem Gewindering und dem Stützring zu minimieren. Hierzu kann eine Kunststoffschicht bzw. -folie, beispielsweise Kapton oder Teflon, eine Hartstoffglattschicht, wie DLC (Diamond Like Carbon), oder ein Gleitmittel wie Molybdändisulfid eingesetzt werden. Vorzugsweise beträgt der Haftreibungskoeffizient zwischen dem Stützring und dem Gewindering weniger als 0,2.

Die Erfindung wird nun anhand eines in den beigefügten Figuren dargestellten Ausführungsbeispiels erläutert. Es zeigt:
- Fig. 1:: eine Schnittzeichnung durch einen erfindungsgemäßen Drucksensor,
- Fign. 2a-c:: schematische Darstellungen der radialen Verformung einer Druckmeßzelle aufgrund axialer Einspannkräfte; und
- Fig. 3a-c:: FEM Daten zur Verformung einer Druckmeßzelle unter axialen Einspannkräften.

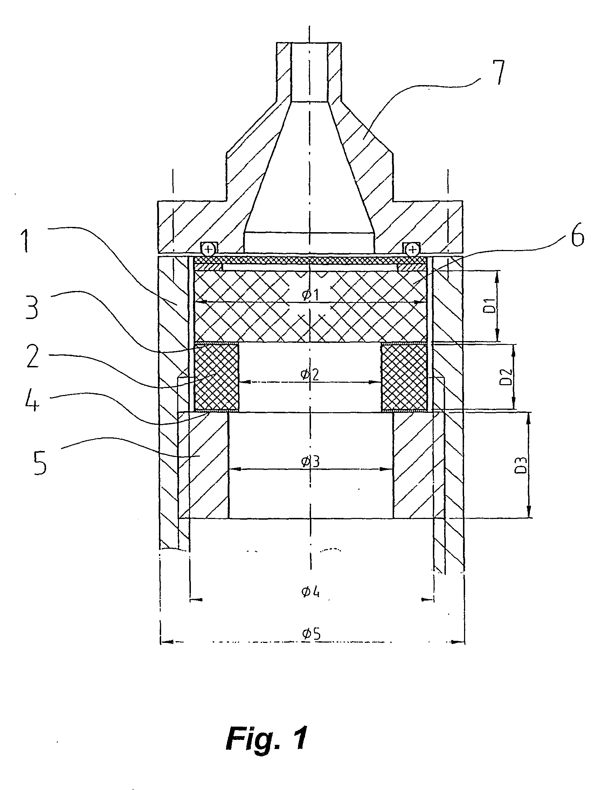

Der in Fig. 1 gezeigte Drucksensor umfaßt eine Druckmeßzelle 6 die einen Grundkörper und eine Meßmembran aus Korund aufweist, die mittels eines Aktivhartlots an der vorderen Stirnfläche des Grundkörper befestigt ist. Ein Stützring aus Korund, dessen Außendurchmesser gleich dem Durchmesser φ₁ des Grundkörpers ist, ist an der rückseitigen Stirnfläche des Grundkörpers mittels eines Aktivhartlots befestigt. Die Druckmeßzelle 6 und der Stützring 2 sind in einem Gehäuse aus Edelstahl angeordnet, welches eine zylindrische Meßzellenkammer 1 und einen Prozeßanschlußflansch 7 aufweist, welcher an einer stirnseitigen Öffnung der Meßzellenkammer 1 angeordnet ist. Der Prozeßanschlußflansch 7 erstreckt sich radial einwärts von der zylindrischen Wand der Meßzellenkammer 1 und bildet so eine axiale Anschlagfläche in der eine Ringnut 71 geformt ist zur Aufnahme eines elastischen Dichtrings 8. Die Druckmeßzelle 6 drückt mit der membranseitigen Stirnfläche axial gegen den Dichtring 8.

Die Einspannkraft ist durch die Kompression des Dichtrings 8 und dessen elastische Eigenschaften gegeben. Die Kompression des Dichtrings wird bei der Montage des Drucksensors über die Position eines Gewinderings 5 eingestellt, der rückseitig auf den Stützring 2 wirkt. Die elastischen Eigenschaften ändern sich durch Alterung bzw. Temperung des Dichtrings unter Kompression. Bei dem beschriebenen Ausführungsbeispiel beträgt die anfängliche Einspannkraft 500 N. Nach einer Temperung des Dichtrings, die beispielsweise im Betrieb durch Reinigungszyklen des Sensors mit Wasserdampf erfolgen kann, wird die Einspannkraft auf 400 N reduziert.

Die Identifizierung des optimalen Innendurchmessers Φ₂ des Stützrings wird nachfolgend für ein Ausführungsbeispiel erläutert. Die vorgegebenen Abmessungen waren: Grundkörperdurchmesser Φ₁=32,4 mm, Dicke des Grundkörpers D1=5mm, Dicke der Membran 160µm, Dicke der Aktivlotschicht 55µm. Der Stützring wurde als "unendlich steif" angenommen.

Mittels FEM wurde die Verformung für axiale Einspannkräfte von 500N und 400N bei verschiedenen Innendurchmessern Φ₂ des Stützrings ermittelt und die daraus folgende Spanne bei Beaufschlagung mit dem Nenndruck wurde ebenfalls mit FEM berechnet. Der Spannefehler ergibt sich durch Vergleich der Spannen bei 500 N Einspannkraft und 400 N Einspannkraft.

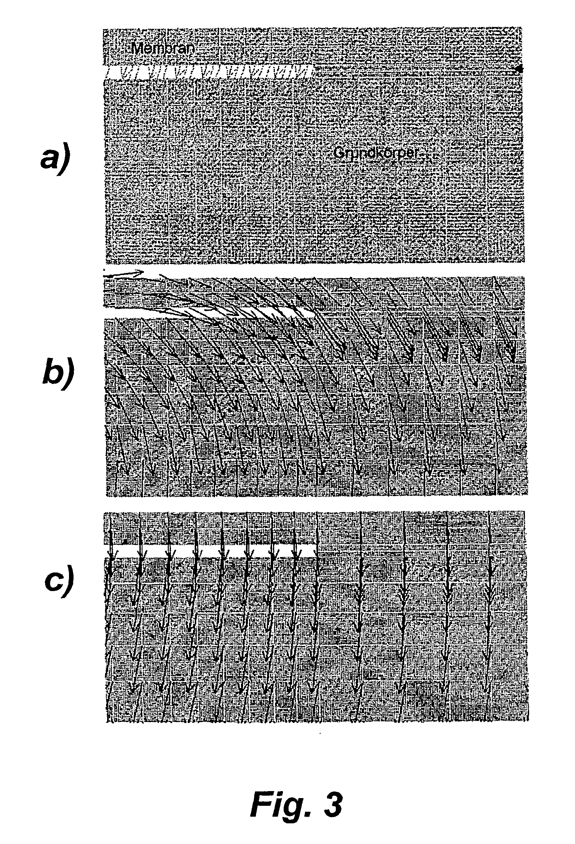

Durch Variation des Innendurchmessers Φ₂ kann der optimale bzw. ein hinreichend guter Wert ermittelt werden, wie anhhand der Fign. 3a-c gezeigt wird.

Die Fign. 3a-c zeigt eine Vektordarstellung der Verschiebung für einen Ausschnitt um die Innenkante der Fügestelle zwischen dem Grundkörper und der Meßmembran für verschiedene Innendurchmesser Φ₂ des Stützrings.

In Fig. 3a beträgt der Innendurchmesser 27,8 mm. Dieser Innendurchmesser ist zu groß. Das gezeigte Vektorfeld bei einer Einspannkraft von 500 N zeigt eine radial einwärts gerichtete Verschiebung, welche die Membransteifigkeit reduziert. Die Spanne wird damit also größer. Die Spannenänderung gegenüber der nicht eingespannten Zelle beträgt etwa +0,8%. Bei einer Einspannkraft von 400N wird die Spannenänderung auf etwa +0,64% reduziert. Der Spannefehler beträgt somit -0,16%.

In Fig. 3b beträgt der Innendurchmesser 10,0 mm dieser Innendurchmesser ist zu klein. Das gezeigte Vektorfeld bei einer Einspannkraft von 500 N zeigt eine radial auswärts gerichtete Verschiebung, welche die Membransteifigkeit erhöht. Die Spanne wird damit also kleiner. Die Spannenänderung gegenüber der nicht eingespannten Zelle beträgt etwa -0,1%. Bei einer Einspannkraft von 400N wird die Spannenänderung auf etwa -0,08% reduziert. Der Spannefehler beträgt somit +0,02%.

In Fig. 3c beträgt der Innendurchmesser 23,2 mm dieser Wert ist nahezu ideal. Das gezeigte Vektorfeld bei einer Einspannkraft von 500 N zeigt im Bereich der Fügestelle der Membran kaum eine radiale Verschiebung, welche die Membransteifigkeit verändern könnte. Die Spannenänderung gegenüber der nicht eingespannten Zelle beträgt etwa -0,01%. Bei einer Einspannkraft von 400N wird die Spannenänderung auf etwa -0,008% reduziert. Der Spannefehler beträgt somit +0,002%.

Somit ist für die gegebenen Abmessungen der Druckmeßzelle ein Innendurchmesser für einen Stützring gefunden, der die radiale Verformung der Druckmeßzelle aufgrund axialer Einspannkräfte weitgehend eliminiert. In der praktischen Umsetzung weist der Stützring vorzugsweise eine Dicke auf, die nicht weniger als die Dicke der Druckmeßzelle ist, um der Annahme einer hinreichend steifen axialen Abstützung gerecht zu werden.

In einer weiteren Ausgestaltung des Verfahrens zur Ermittlung der idealen Geometrie des Stützrings wurde ein Stützring endlicher Steifigkeit mit dem gleichen Elastizitätsmodul wie der Grundkörper der Druckmeßzelle angenommen. Sowohl die Dicke des Stützrings und dessen Innendurchmesser als auch die Reibung zwischen dem Stützring und dem Gewindering wurde variiert. Im Ergebnis wurde bestätigt daß die zuvor beschriebene Simulation unter der Annahme eines unendlich steifen Stützrings bereits einen geeigneten Innendurchmesser identifiziert hatte. Die Annahme unendlicher Steifigkeit des Stützrings erweist sich für Stützringe mit einer Dicke die gleich der Dicke des Grundkörpers ist, natürgemäß angemessener als für dünnere Stützringe. Bei dünneren Stützringen, beispielsweise mit der 0,25 fachen Grundkörperdicke, ist nach derzeitiger Erkenntnis der Einfluß der Reibung zwischen dem Stützring und dem Gewindering stärker als bei Stützringen mit der Dicke des Grundkörpers.

Wenn ein dünner Stützring verwendet werden soll, ist es daher vorteilhaft, die Simulation mit dem aufwendigeren Modell durchzuführen, welches die Reibung zwischen dem Stützring und dem Gewindering und die elastischen Eigenschaften des Stützrings berücksichtigt. Selbstverständlich sind auch die Ergebnisse für dicke Stützringe, beispielsweise der mit Dicke des Grundkörpers, mit dem aufwendigeren Modell genauer, aber geeignete geometrien lassen sich, wie bereits erwähnt, schon mit dem einfacheren Modell identifizieren.

Schließlich wurden zusätzlich die Abmessungen des Gewinderings variiert wobei sich zeigte, daß der Einfluß dieser Abmessungen im wesentlichen vernachlässigbar ist.

## Patentansprüche

1. Drucksensor, umfassend
eine Druckmesszelle (6) mit einem im wesentlichen zylindrischen Grundkörper mit einem ersten Durchmesser und einer ersten Dicke,
einen an einer Stirnfläche des Grundkörpers gefügten Messmembran mit einem zweiten Durchmesser und einer zweiten Dicke,
einen elastischen Dichtring (8) mit einem dritten Durchmesser und einer dritten Dicke
und einen Stützring (8) mit einem vierten Außendurchmesser, einem vierten Innendurchmesser und einer vierten Dicke, wobei die vierte Dicke mindestens gleich der ersten Dicke ist, wobei der vierte Außendurchmesser gleich dem ersten Außendurchmesser ist,
wobei die Druckmesszelle (6) zwischen dem elastischen Dichtring (8) und dem Stützring (8) axial eingespannt ist,
wobei der Dichtring (8) auf der membranseitigen Stirnseite der Druckmesszelle (6) aufliegt, und der Stützring (8) die von der Messmembran abgewandte rückwärtige Stirnseite der Druckmesszelle (6) abstützt; **dadurch gekennzeichnet,**
**dass** der Innendurchmesser des Stützrings (8) solchermaßen auf die Abmessungen des Dichtrings und der Druckmesszelle (6) abgestimmt ist, dass eine durch die axiale Einspannung der Druckmesszelle (6) bedingte radiale Verformung der membranseitigen Stirnfläche so gering ist, dass der Spannefehler des Drucksensors aufgrund einer Reduzierung der axialen Einspannkraft um mindestens 10% nicht mehr als 0,02% beträgt.

2. Drucksensor nach Anspruch 1, wobei der Innendurchmesser des Stützrings so gewählt ist, dass der Spannenfehler bei einer Reduzierung der Einspannkraft um mindestens 20% nicht mehr als etwa 0,02% beträgt.

3. Drucksensor nach Anspruch 1, wobei der Innendurchmesser des Stützrings so gewählt ist, dass der Spannenfehler bei einer Reduzierung der Einspannkraft um mindestens 10% bzw. mindestens 20% nicht mehr als etwa 0,01% beträgt.

4. Drucksensor nach einem der Ansprüche 1 bis 3, wobei axiale Einspannkraft zwischen 350 N und 550 N beträgt.

5. Drucksensor nach einem der Ansprüche 1 bis 4, wobei der Grundkörper und die Messmembran das gleiche Material, insbesondere ein keramisches Material aufweisen.

6. Drucksensor nach einem der Ansprüche 1 bis 5, wobei der Stützring (8) das gleiche Material wie der Grundkörper aufweist.

7. Drucksensor nach einem der Ansprüche 1 bis 6, wobei der Stützring (8) fest mit dem Grundkörper verbunden ist.

8. Drucksensor nach einem der Ansprüche 1 bis 7, weiterhin umfassend ein Gehäuse mit einer Messzellenkammer zur Aufnahme der Druckmesszelle (6), wobei das Gehäuse in seinem Inneren eine axiale Anschlagfläche aufweist, welche den Dichtring (8) axial abstützt, und einen Gewindering, welcher in ein Innengewinde in einer Wandung der Messzellenkammer eingreift und auf die der Druckmesszelle (6) abgewandten Rückseite des Stützrings eine axiale Einspannkraft ausübt.

9. Drucksensor nach einem der Ansprüche 1 bis 8, weiterhin umfassend Mittel zur Minimierung der Reibung zwischen dem Gewindering und dem Stützring.

10. Drucksensor nach einem der Ansprüche 1 bis 8, wobei der Haftreibungskoeffizient zwischen dem Stützring (8) und dem Gewindering weniger als 0,2 beträgt.

11. Verfahren zur iterativen Optimierung der Abmessungen eines Stützrings für einen Drucksensor, nach einem der vorherigen Ansprüche unter Einsatz von FEM, umfassend die Schritte :
(i) Festlegen einer Geometrie für den Stützring,
(ii) Berechnen einer ersten Spannenänderung des Drucksensors unter einer ersten axialen Einspannungskraft ;
(iii) Berechnen einer zweiten Spannenänderung des Drucksensors unter einer zweiten axialen Einspannungskraft ;
(iv) Ermittlung des Spannefehlers durch Vergleich der ersten Spannenänderung mit der zweiten Spannenänderung.
(v) Bewertung des Spannefehlers ; und
(vi) Variation des Innendurchmessers des Stützrings, und
Wiederholen der Schritte (ii) bis (vi) bis eine Geometrie gefunden ist, bei welcher der Spannefehler des Drucksensors aufgrund einer Reduzierung der axialen Einspannkraft um mindestens 10% nicht mehr als 0,02% beträgt.

## Claims

1. Pressure sensor, comprising
a pressure measuring cell (6) with a primarily cylindrical meter body with a first diameter and a first thickness,
a measuring membrane, fitted at a face of the meter body, with a second diameter and a second thickness,
an elastic sealing ring (8) with a third diameter and a third thickness,
and a support ring (8) with a fourth outer diameter and a fourth inner diameter and a fourth thickness,
where the fourth thickness is at least the same as the first thickness,
where the fourth outer diameter is the same as the first outer diameter, where the pressure measuring cell (6) is axially tensioned between the elastic sealing ring (8) and the support ring (8)
where the sealing ring (8) rests on the membrane-facing face of the pressure measuring cell (6) and the support ring (8) supports the rear face of the pressure measuring cell (6) which faces away from the measuring membrane, **characterized in that**:
the inner diameter of the support ring (8) is aligned with the dimensions of the sealing ring and the pressure measuring cell (6) in such a way that a radial distortion of the membrane-facing face, caused by the axial clamping of the pressure measuring cell (6), is so small that the span error of the pressure sensor due to a reduction of the axial clamping force by at least 10% does not exceed 0.02%

2. Pressure sensor as per Claim 1, where the inner diameter of the support ring is selected in such a way that the span error is not more than roughly 0.02% when the clamping force is reduced by at least 20%.

3. Pressure sensor as per Claim 1, where the inner diameter of the support ring is selected in such a way that the span error is not more than roughly 0.01 % when the clamping force is reduced by at least 10% or at least 20%.

4. Pressure sensor as per one of the Claims 1-3, where the axial clamping force is between 350 N and 550 N.

5. Pressure sensor as per one of the Claims 1-4, where the meter body and the measuring membrane have the same material, particularly a ceramic material.

6. Pressure sensor as per one of the Claims 1-5, where the support ring (8) has the same material as the meter body.

7. Pressure sensor as per one of the Claims 1-6, where the support ring (8) is permanently connected to the meter body.

8. Pressure sensor as per one of the Claims 1-7, further comprising a housing with a measuring cell chamber to hold the pressure measuring cell (6), where the inside of the housing has an axial locating surface which provides axial support for the sealing ring (8), and a threaded ring which engages in an internal thread in a wall of the measuring cell chamber and on which the rear side of the support ring, facing away from the pressure measuring cell (6), exerts an axial clamping force.

9. Pressure sensor as per one of the Claims 1-8, further comprising a means to minimize friction between the threaded ring and the support ring.

10. Pressure sensor as per one of the Claims 1-8, where the coefficient of static friction between the support ring (8) and the threaded ring is less than 0.2.

11. Process for the repeated optimization of the dimensions of a support ring for a pressure sensor as per one of the preview claims using FEM, comprising the following steps:
(i) determine a geometry for the support ring
(ii) calculate a first span change of the pressure sensor under a first axial clamping force
(iii) calculate a second span change of the pressure sensor under a second axial clamping force
(iv) determine the span error by comparing the first span change to the second span change
(v) evaluate the span error and
(vi) vary the inner diameter of the support ring
Repeat steps (ii) to (vi) until you have found a geometry where the span error of the pressure sensor does not exceed 0.02% due to a reduction in the axial clamping force by at least 10%.

## Revendications

1. Capteur de pression, comprenant
une cellule de mesure de pression (6) avec un corps de base pour l'essentiel cylindrique, d'un premier diamètre et d'une première épaisseur,
une membrane de mesure aboutée à une surface frontale du corps de base, d'un deuxième diamètre et d'une deuxième épaisseur,
une bague d'étanchéité (8) élastique, d'un troisième diamètre et d'une troisième épaisseur,
et une bague d'appui (2) d'un quatrième diamètre extérieur, d'un quatrième diamètre intérieur et d'une quatrième épaisseur,
la quatrième épaisseur étant au minimum égale à la première épaisseur,
le quatrième diamètre extérieur étant égal au premier diamètre extérieur,
la cellule de mesure de pression (6) étant serrée axialement entre la bague d'étanchéité (8) élastique et la bague d'appui (2),
la bague d'étanchéité (8) reposant sur la face frontale, faisant face à la membrane, de la cellule de mesure de pression (6), et la bague d'appui (2) s'appuyant contre la face frontale arrière, opposée à la membrane de mesure, de la cellule de mesure de pression (6) ; **caractérisé en ce**
**que** le diamètre intérieur de la bague d'appui (2) est adapté aux dimensions de la bague d'étanchéité et de la cellule de mesure de pression (6) de telle manière qu'une déformation radiale de la face frontale faisant face à la membrane, due au serrage axial de la cellule de mesure de pression (6), est si faible que l'erreur de serrage du capteur de pression n'est pas supérieure à 0,02 % en cas de réduction de la force de serrage axiale d'au moins 10 %.

2. Capteur de pression selon la revendication 1, pour lequel le diamètre intérieur de la bague d'appui est sélectionné de telle sorte que l'erreur de serrage n'est pas supérieure à 0,02 % dans le cas d'une réduction de la force de serrage axiale d'au moins 20%.

3. Capteur de pression selon la revendication 1, pour lequel le diamètre intérieur de la bague d'appui est sélectionné de telle sorte que l'erreur de serrage n'est pas supérieure à 0,01 % dans le cas d'une réduction de la force de serrage axiale d'au moins 10 % ou d'au moins 20 %.

4. Capteur de pression selon l'une des revendications 1 à 3, pour lequel la force de serrage axiale est comprise entre 350 N et 550 N.

5. Capteur de pression selon l'une des revendications 1 à 4, pour lequel le corps de base et la membrane de mesure présentent le même matériau, notamment un matériau en céramique.

6. Capteur de pression selon l'une des revendications 1 à 5, pour lequel la bague d'appui (2) présente le même matériau que le corps de base.

7. Capteur de pression selon l'une des revendications 1 à 6, pour lequel la bague d'appui (2) est reliée de façon fixe avec le corps de base.

8. Capteur de pression selon l'une des revendications 1 à 7, comprenant en outre un boîtier avec une chambre de cellule de mesure destiné au logement de la cellule de mesure de pression (6), le boîtier présentant dans son intérieur une surface de butée axiale, laquelle supporte axialement la bague d'étanchéité (8), et une bague filetée, laquelle s'engage dans un filetage intérieur au sein d'une paroi de la chambre de cellule de mesure et exerce une force de serrage axiale sur la face arrière de la bague d'appui, laquelle face est située du côté opposé à la cellule de mesure de pression (6).

9. Capteur de pression selon l'une des revendications 1 à 8, comprenant en outre des moyens destinés à la minimisation du frottement entre la bague filetée et la bague d'appui.

10. Capteur de pression selon l'une des revendications 1 à 8, pour lequel le coefficient de frottement par adhérence entre la bague d'appui (2) et la bague filetée est inférieur à 0,2.

11. Procédé destiné à l'optimisation itérative des dimensions d'une bague d'appui pour un capteur de pression, d'après l'une des revendications précédentes, basé sur la méthode des éléments finis (FEM), constitué des étapes suivantes :
(i) Définition d'une géométrie pour la bague d'appui.
(ii) Calcul d'une première modification de serrage du capteur de pression sous une première force de serrage axiale ;
(iii) Calcul d'une deuxième modification de serrage du capteur de pression sous une deuxième force de serrage axiale ;
(iv) Détermination de l'erreur de serrage par comparaison de la première modification de serrage avec la deuxième modification de serrage ;
(v) Évaluation de l'erreur de serrage ; et
(vi) Variation du diamètre intérieur de la bague d'appui, et
Répétition des étapes (ii) à (vi) jusqu'à ce que soit trouvée une géométrie, pour laquelle l'erreur de serrage du capteur de pression n'est pas supérieure à 0,02 % en cas de réduction de la force de serrage axiale d'au moins 10 %.
